# EUROPEAN PATENT SPECIFICATION

(11) **EP 0 416 720 B1**
(45) Date of publication and mention of the grant of the patent: **10.07.1996**
(21) Application number: 90305072.2
(22) Date of filing: 10.05.1990
(51) Int. Cl.: H04N 17/04, H04N 9/28, H04N 9/31

(54) **Ambient light rejecting quad photodiode sensor**
Vier-Richtungs-Fotodiodensensor zur Unterdrückung des Umgebungslichts
Capteur orthogonal à photodiode rejetant la lumière ambiante

(30) Priority: 01.09.1989 CA 610177
(43) Date of publication of application: 13.03.1991
(73) Proprietor: ELECTROHOME LIMITED, Kitchener Ontario N2G 4J6 (CA)
(72) Inventor: Schmidt, Terrence Carl, Ontario, N0B 2T0 (CA)
(74) Representative: Crawford, Andrew Birkby

(56) References cited:
- EP-A- 0 280 302
- DE-A- 3 417 470
- GB-A- 2 048 625
- US-A- 4 366 377
- US-A- 4 913 546
- PATENT ABSTRACTS OF JAPAN vol. 10, no. 347 (E-457) 21 November 1986 & JP-A-61 150 269
- PATENT ABSTRACTS OF JAPAN vol. 13, no. 80 (P-832) 23 February 1989 & JP-A-63 263 489
- PATENT ABSTRACTS OF JAPAN vol. 9, no. 334 (P-417) 27 December 1985 & JP-A-60 158 309

## Description

This invention relates in general to video projection convergence systems, and more particularly to an ambient light rejecting quad photodiode sensor for use in a convergence system.

Video projection systems are well known for projecting a composite colour image on a flat wall, rear screen or curved front screen surface. The image is generated via three coloured light beams (red, green and blue) which are centered and focused for convergence at a centre point of the screen.

Since the respective coloured light beams are projected at different angles for focusing at the centre point, mis-registration of the images is known to occur on the edges of the screen, etc.

In order to correct the problem of mis-registration of images in projection video systems, convergence systems have been developed for deflecting respective ones of the beams by predetermined amounts in accordance with information input to the convergence system by an operator using a cursor control, etc.

More recently, automatic convergence systems have been developed which utilize sensors for detecting mis-registration of a projected image at various zones on the screen and automatically deflecting the electron beams by the required amounts for obtaining convergence of the image without user input. The sensors in known automatic convergence systems have typically been fabricated using CCD arrays. The CCD arrays detect and digitize the projected image, which is then processed via microprocessor circuitry for detecting mis-registration. In response to detecting mis-registration, the microprocessor circuitry generates appropriate convergence coil signals, etc. A disadvantage of CCD based sensors is that such sensors integrate the image over an entire raster frame. Accordingly, the signal-to-noise ratio of the detected image relative to detected ambient light is very low. As a result, CCD image sensors are characterized by poor image detection, especially in relation to blue phosphor.

In order to overcome the disadvantages resulting from the use of CCD sensors, a number of prior art attempts have been made at using photodiode arrays for detecting the projected image. Because a photodiode array is peak sensitive, as opposed to time averaging as in CCD sensors, the intensely high peak intensities from a CRT phosphor can be readily sensed from low reflectivity surfaces such as rear screens and off-axis high-gain (i.e. curved) front screens.

For example, United States patent 4,642,529 (Sperry Corporation) discloses a photoresponsive sensor carried by an X-Y mount. The sensor is used for providing precise convergence measurement of beams in a CRT display by sensing the displacement of brightness peaks by an array of phosphorescent regions which are sequentially illuminated on the display screen. Convergence is calculated by calibrating the recorded brightness peaks as a function of beam displacement. The system is adapted to measure both vertical and horizontal components as well as line width.

United States Patent US-A-4,683,467 (Hughes Aircraft Company) discloses an image registration system in which a plurality of sensors are provided - one for each projected colour image. Each sensor comprises three photodetectors which are disposed in a right angle relationship for determining the position of a registration pattern on the screen. The degree of incidence of the registration pattern upon the photodetectors results in varying amounts of photocurrent generated thereby. By comparing the photocurrents produced by the horizontal and vertical photodetectors, different signals are produced, thereby indicating that the registration pattern is either in registration or out of registration.

United States patents US-A-3,962,722 (Zenith Radio Corporation) and US-A-4,441,120 (Philips Corporation) contemplate the use of quadrant photodetectors in a convergence system.

More particularly, the Zenith patent discloses a plurality of photocells which are preferably in a generally rectangular array. Similarly, the Philips patent discloses a square photosensitive cell consisting of four surface photodiodes placed in a quadrant for centering an electron beam on the crossing of the four diodes by comparing the signals generated by the photodiodes.

Although the above references discussed teach the use of quadrant photodiodes sensors in a convergence system, thereby overcoming some of the disadvantages of prior art CCD arrays, each of the prior art quad sensor configurations suffer from poor efficiency resulting from sensor dark current and ambient room light illuminating the sensor.

More particularly, since in many industrial applications the room lighting cannot be turned off, the sensors are exposed to considerable ambient light, thereby reducing the signal-to-noise detection ratio of the sensors. The colour blue is particularly difficult to distinguish in the presence of ambient light since the ambient light tends to "wash out" a blue image.

Furthermore, it is well known that a dark current is generated by photodiodes in proportion to the temperature operation of the photodiodes. Thus, thermally generated dark current within the prior art sensors further contributes to the reduced signal-to-signal noise detection ratio.

Patent Abstracts of Japan, vol. 10, No. 347 (E457) of 21 November 1986, relating to Japanese Application JP-A-61150269 discloses an image sensing device having a first photodiode array in which the photodiodes are all arranged in parallel, and a second photodiode array in which the photodiodes are arranged in parallel. The first and second arrays are arranged with reverse polarity, and the second array has a photoshielding film, in order that compensation may be provided for any dark current generated in the first array.

According to an aspect of the present invention, compensation diodes are connected with reverse polarity to respective ones of the quadrant photodiodes in the sensor. The compensation photodiodes are located outside of the illumination area of the quadrant photodiodes such that the illuminated image falls only on the inner photodiodes whereas ambient light illuminates both the quadrant and compensation photodiodes. Accordingly, both the compensation and quadrant photodiodes generate equal but reverse photogenerated currents in response to the ambient light. The photogenerated currents due to ambient light cancel, leaving only the current due to illumination of the inner photodiodes by the image.

An additional advantage of the present invention is that the dark current generated by the compensation diodes is equal and in opposite direction to the dark current generated by the respective inner quadrant photodiodes, since both photodiodes are electrically matched and operate at the same temperature.

Thus, according to the present invention, there is provided an optical sensor comprising a plurality of first photodiodes arranged in an array and connected together with like polarity, and a plurality of further photodiodes connected in reverse parallel to said plurality of first photodiodes,
characterised in that the further photodiodes are connected in parallel with, and with opposite polarity to, respective ones of said first photodiodes, and that ambient light is projected on the whole optical sensor (1) whereby to compensate for the effects of ambient light on said first photodiodes.

A preferred embodiment of the present invention will be described in greater detail below with reference to the following drawings, in which:
Figure 1 is a schematic illustration of a convergence system employing a quad photodiode sensor in accordance with the present invention;
Figure 2 is a plan view of the quad photodiode sensor in accordance with the preferred embodiment; and
Figures 3A and 3B are schematic diagrams of amplifier and conversion circuitry connected to the quadrant photodiode sensor of the preferred embodiment within the convergence system of Figure 1.

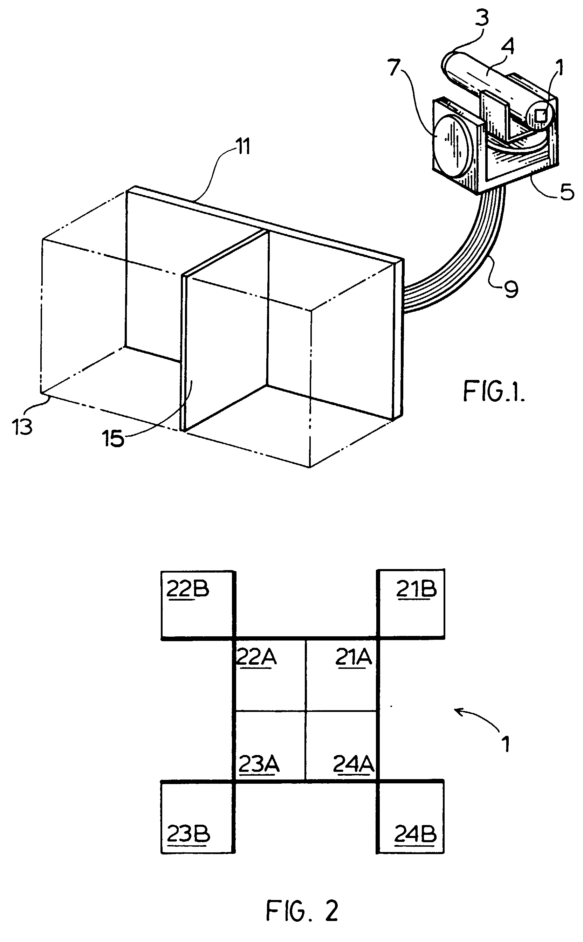

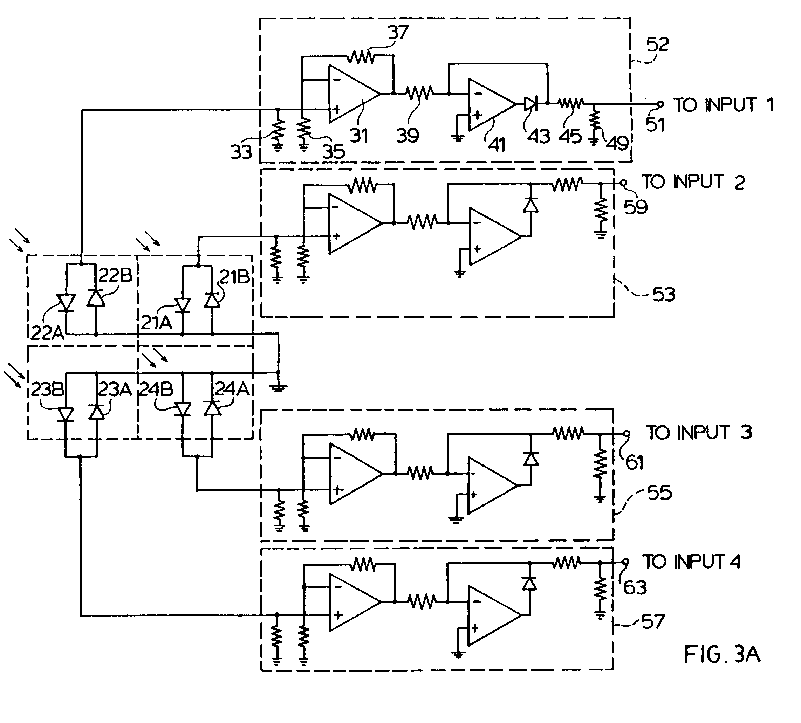

Turning to Figure 1, a convergence system is shown comprising a quadrant photodiode sensor 1 in association with imaging lens 3 and mounted on an X/Y motor assembly 5. The sensor/motor assembly 5 consists of a mechanical structure supporting two stepper motors 7 in an X/Y gimbal configuration for orienting the imaging lens 3 and sensor 1 to focus on a projected image (not shown), and a tubular housing 4 containing the lens 3 at one end and the sensor 1 at the other end. The sensor is attached to a small surface mount preamplifier board, as discussed below with reference to Figure 3A.

Preferably, the sensor/motor assembly 5 is attached to the frame of a projector (not shown) directly beneath the center (green) lens thereof.

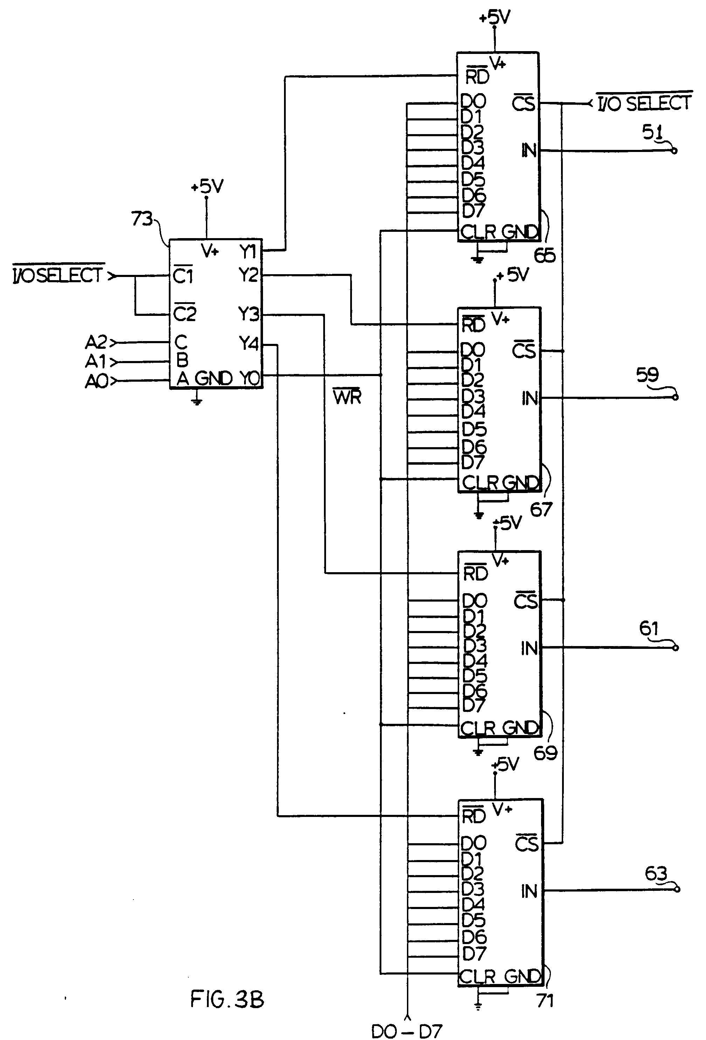

A wire harness 9 connects the quadrant photodiode sensor 1 and motors 7 to a motherboard 11 within a card cage 13 supporting a main printed circuit board 15 which contains the circuitry for operating the motors 7 and digitizing the signals received from the quadrant photodiode sensor 1, as discussed in greater detail below with reference to Figures 3A and 3B.

The positions of the red, green and blue image components at the projected image point are detected by the sensor 1 and adjusted to coincide with the center of the quadrant, in a manner similar to that discussed above with reference to United State Patent 4,683,467 (Hughes Aircraft). Full screen convergence is effected by repeating the operation for a multiplicity of convergence points of the entire raster image, in a well known manner.

The automatic convergence operation is initiated by making a selection from a convergence menu via the projector's remote or built-in key-pads (not shown). Thereafter, software running in the convergence system assumes control of the projector until completion of the convergence or until aborted by a user. During the operation, the microprocessor uses the video control board (not shown, but incorporated in card cage 13) to display targets and patterns required by the convergence algorithms.

Sensor 1 is shown in greater detail with reference to Figure 2, comprising a quadrant arrangement of four inner photodiodes 21A, 22A, 23A and 24A, and four corresponding and matched reverse biased outer compensation photodiodes 21B, 22B, 23B and 24B. As discussed above, the function of reverse bias compensation diodes 21B-24B is to cancel the effect of ambient light illumination and sensor dark current in the sensor 1. In particular, by direct connection of the compensation diodes 21B-24B in a reverse direction of polarity to respective ones of the quad photodiodes 21A-24A, photogenerated current due to ambient room light is effectively cancelled, as well as temperature generated sensor dark current, resulting in a significant boost in signal to noise ratio of the illuminated image, as well as preventing switching noise of the detected image signal prior to amplification via the preamplifier circuitry discussed below with reference to Figure 3A.

Since the photodiode sensor is peak responding, unlike prior art CCD sensors that integrate over an entire frame, the high peak intensities from a CRT phosphor can be readily sensed by the quad photodiode sensor 1 from low reflectivity surfaces such as rear screens and off-axis high-gain front screens.

The inner photodiodes 21A-24A and outer compensation diodes 21B-24B must be substantially matched such that, under uniform illumination, the compensation diode reverse photocurrent is equal to the inner quadrant diode photocurrent within +/- 10 percent.

According to a successful prototype, the area of each quadrant and compensation photodiode was 0.8 x 0.8 mm, with a metalization separation of 0.1 mm. The compensation photodiodes 21B-24B were placed as close as practical to corresponding respective ones of the inner quadrant photodiodes 21A-24A so as not to exceed a separation of 0.15 mm.

Turning to Figure 3A, preamplifier circuitry shown connected to the sensor 1. As discussed above, the circuitry is preferably disposed on a surface mount board attached to the tubular portion 4 of the sensor/motor assembly 5.

The sensor 1 is shown schematically in Figure 3A comprising four quadrants, each including parallel reverse oriented photodiode pairs. Each of the inner quadrant photodiodes 21A-24A have their anodes connected in common to ground. Respective cathodes of the inner photodiodes 21A-24A are connected to respective preamplifier circuits 52-57, as discussed below. Each of the compensation photodiodes 21B-24B is shown connected with reverse polarity across corresponding ones of the inner quadrant photodiodes 21A-24A.

The parallel combination of photodiodes 22A and 22B are shown connected to preamplifier circuit 52. More particularly, the cathode of photodiode 21A and anode of photodiode 22B are connected to a non-inverting input of a differential amplifier 31. Biasing resistors 33, 35 and 37 are shown connected in a well known configuration for setting the gain of non-inverting amplifier 31. An output of 31 is connected via current limiting resistor 39 to the inverting input of a further differential amplifier 41. A non-inverting input of amplifier 41 is connected to ground, and an output of amplifier 41 is connected via diode 43 to the inverting input thereof. Amplifier 41 is configured to function as a precision limiting AC/DC convertor, according to a well known design. The output of amplifier 41 is also connected via diode 43 to a combination of output load resistors 45 and 49 and therefrom to an output terminal 51, in a well known manner.

Circuits 53, 55 and 57 are shown in dashed outline connected to respective photodiode pairs 21A and 21B, 24A and 24B, 23A and 23B, and operate in an identical manner to preamplifier circuit 52.

Turning to Figure 3B, output terminals 51, 59, 61 and 63 from respective ones of the preamplifier circuits (Figure 3A) are shown connected in a well known manner to respective inputs (IN) of analogue-to-digital converters 65, 67, 69 and 71. Output terminals D0-D7 of convertors 65-71 are connected to a databus of the convergence system microprocessor (not shown). Respective ones of the analogue-to-digital converters 65-71 are selected via a 3-to-8 selector circuit 73 responsive to predetermined combinations of microprocessor address bits A0, A1 and A2 being applied to the control inputs A, B, and C thereof. In particular, demultiplexed outputs Y1-Y4 are connected to respective read inputs (RD) of converters 65-71. The Y0 output of 3-to-8 selector 73 is connected to the write enable input WR for each of the converters 65-71.

In operation, ambient light-generated photocurrent and dark current are cancelled in the respective pairs of photodiodes 21A and 21B to 24A and 24B, while respective photocurrents generated by positions of the single colour image illuminating photodiodes 21A-24A are applied to respective amplifier circuits 52-57. The preamplifier circuits perform necessary gain adjustment and AC filtering of the detected image photocurrent signals, and in response generate respective DC voltages (i.e. photovoltaic potentials) proportional to the position of the image on the respective photodiodes 21A-24A. These DC signals are applied to respective inputs of converters 65-71 which in response generate respective 8-bit digital values for application to the convergence system microprocessor databus, as discussed above. By comparing the respective 8-bit values, the microprocessor is able to detect mis-registration of the image and in response generate the required convergence coil correction signals, in a well known manner.

In summary, the quadrant photodiode sensor 1 of the present invention is adapted for use in a microprocessor controlled convergence system for detecting colour misconvergence of the three primary colours on a projector screen. In response, the convergence system corrects the registration of the colours automatically, without operator intervention. The sensor configuration of the present invention is used to detect a spot of light projected from one colour gun of a CRT projector, with a high degree of positional accuracy. By sequentially measuring each colour, corrective action is undertaken by the convergence system.

Moreover, according to the present invention, compensation diodes are connected to respective ones of the inner quadrant photodiodes, in order that the sensor may operate under high ambient light conditions on flat white, and high-gain front and rear screens. By connection of the compensation photodiodes in a reverse direction of polarity to each quadrant of the sensor, a large boost is provided in the signal-to-noise ratio achieved by the sensor. This essentially cancels the effects of unwanted ambient room light as well as sensor dark current, and prevents switching noise before the signal is fed to the sensitive low noise preamplifiers discussed with reference to Figure 3A.

Other embodiments and modifications of the invention are possible. For example, the novel sensing and compensation photodiode arrangement of the present invention may be used in sensors other than the quadrant sensor 1 of the preferred embodiment. In particular, a fewer or greater number photodiode elements may be used. As an example, a three inner-photodiode sensor may be devised with the configuration disclosed in United States Patent 4,683,467, as discussed above. Indeed, the advantages of connecting a reverse compensation photodiode to a light or image sensing photodiode may be achieved in a system in which only a single sensing photodiode is used, such as in an optical interrupting switch, etc. It is contemplated that numerous applications of the principles of the present invention are possible outside of the field of video projection technology.

## Claims

1. An optical sensor (1) comprising a plurality of first photodiodes (21A,22A,23A,24A) arranged in an array and connected together with like polarity, and a plurality of further photodiodes (21B,22B,23B,24B) connected in reverse parallel to said plurality of first photodiodes,
characterised in that the further photodiodes are connected in parallel with, and with opposite polarity to, respective ones of said first photodiodes, and that ambient light is projected on the whole optical sensor (1) whereby to compensate for the effects of ambient light on said first photodiodes.

2. An optical sensor (1) according to claim 1, wherein said plurality of first photodiodes (21A-24A) are arranged in a quadrant.

3. An optical sensor (1) according to claim 2, wherein respective ones of said further photodiodes (21B-24B) are disposed at respective corners of said quadrant.

4. An optical sensor (1) according to claim 3, wherein said respective ones of said further photodiodes (21B-24B) are located within 0.15 mm of said respective corners.

5. An optical sensor (1) according to any of claims 1, 2, 3 or 4, wherein said further photodiodes (21B-24B) are substantially electrically matched with said first photodiodes (21A-24A).

6. An optical sensor (1) according to any of claims 1 to 4, wherein under uniform illumination photocurrent within said first photodiodes (21A-24A) is equal to the photocurrent within said further photodiodes (21B-24B) within +/- 10%.

7. An optical sensor (1) according to any of claims 1 to 6, wherein each of said first and further photodiodes has an active area of approximately 0.8 x 0.8mm with a metalization separation of 0.1 mm.

8. An optical sensor (1) according to any of claims 1 to 7, adapted for use in a circuit for detecting mis-registration of a projected image in a video system, and wherein said first plurality of photodiodes (21A-24A) are arranged into four quadrants adapted to be illuminated by said projected image and in response generating four photovoltaic potentials corresponding to respective portions of said projected image incident on respective ones of said quadrants; and wherein respective ones of said plurality of further photodiodes (21B-24B) are connected at respective corners of said quadrant in parallel with and with reverse polarity to respective ones of said first plurality of photodiodes.

9. A circuit including an optical sensor according to claim 8, said circuit further comprising means (65,67,69,71) for converting said four photovoltaic potentials to respective digital values; and means for detecting inequality of said digital values and in response indicating detection of mis-registration of said projected image.

## Patentansprüche

1. Optischer Sensor (1), der eine Vielzahl erster Photodioden (21A, 22A, 23A, 24A) umfaßt, die in einer Gruppe angeordnet und mit gleicher Polarität zusammengeschaltet sind, sowie eine Vielzahl weiterer Photodioden (21B, 22B, 23B, 24B), die parallel zu der Vielzahl erster Photodioden entgegengesetzt geschaltet sind,
**dadurch gekennzeichnet**, daß die weiteren Photodioden parallel zu entsprechenden der ersten Photodioden und mit entgegengesetzter Polarität zu diesen geschaltet sind, und daß Umgebungslicht auf den gesamten optischen Sensor (1) projiziert wird, so daß die Auswirkungen von Umgebungslicht auf die ersten Photodioden ausgeglichen werden.

2. Optischer Sensor (1) nach Anspruch 1, wobei die Vielzahl erster Photodioden (21A-24A) in einem Quadranten angeordnet ist.

3. Optischer Sensor (1) nach Anspruch 2, wobei entsprechende der weiteren Photodioden (21B-24B) an entsprechenden Ecken des Quadranten angeordnet sind.

4. Optischer Sensor (1) nach Anspruch 3, wobei entsprechende der weiteren Photodioden (21B-24B) nicht mehr als 0,15 mm von den entsprechenden Ecken entfernt sind.

5. Optischer Sensor (1) nach einem der Ansprüche 1, 2, 3 oder 4, wobei die weiteren Photodioden (21B-24B) im wesentlichen elektrisch an die ersten Photodioden (21A-24A) angepaßt sind.

6. Optischer Sensor (1) nach einem der Ansprüche 1 bis 4, wobei bei gleichmäßiger Beleuchtung der Photostrom in den ersten Photodioden (21A-24A) mit einer Toleranz von +- 10% dem Photostrom in den weiteren Photodioden (21B-24B) gleich ist.

7. Optischer Sensor (1) nach einem der Ansprüche 1 bis 6, wobei jede der ersten und der weiteren Photodioden eine aktive Fläche von 0,8 x 0,8 mm bei einem Metallisations-Zwischenraum von 0,1 mm aufweist.

8. Optischer Sensor (1) nach einem der Ansprüche 1 bis 7 für den Einsatz in einer Schaltung zum Erfassen fehlerhafter Deckung eines projizierten Bildes in einem Videosystem, wobei die erste Vielzahl von Photodioden (21A-24A) in vier Quadranten angeordnet ist, die von dem projizierten Bild beleuchtet werden und in Reaktion darauf vier Photovoltaik-Potentiale erzeugen, die entsprechenden Abschnitten des projizierten Bildes entsprechen, die auf entsprechende der Quadranten auftreffen; und wobei entsprechende der Vielzahl weiterer Photodioden (21B-24B) an entsprechenden Ecken des Quadranten parallel zu entsprechenden der ersten Vielzahl von Photodioden und mit entgegengesetzter Polarität zu diesen geschaltet sind.

9. Schaltung, die einen optischen Sensor nach Anspruch 8 enthält, wobei die Schaltung des weiteren Einrichtungen (65, 67, 69, 71) umfaßt, die die vier Photovoltaik-Potentiale in entsprechende digitale Werte umwandeln; sowie Einrichtungen, die Ungleichheit der digitalen Werte erfassen und in Reaktion darauf Erfassung von fehlerhafter Deckung des projizierten Bildes anzeigen.

## Revendications

1. Capteur optique (1) comprenant une pluralité de premières photodiodes (21A, 22A, 23A, 24A) disposées suivant un groupement et connectées ensemble avec une même polarité, et une pluralité de photodiodes supplémentaires (21B, 22B, 23B, 24B) connectées en parallèle inverse avec ladite pluralité de premières photodiodes,
caractérisé en ce que les photodiodes supplémentaires sont connectées en parallèle et suivant des polarités opposées par rapport aux photodiodes respectives de ladite pluralité de premières photodiodes, et en ce qu'une lumière ambiante est projetée sur tout le capteur optique (1) de façon à compenser les effets de la lumière ambiante sur lesdites premières photodiodes.

2. Capteur optique (1) selon la revendication 1, où ladite pluralité de premières photodiodes (21A à 24A) est disposée en montage quadruple.

3. Capteur optique (1) selon la revendication 2, où des photodiodes respectives de ladite pluralité de photodiodes supplémentaires (21B à 24B) sont disposées aux coins respectifs de la disposition en montage quadruple.

4. Capteur optique (1) selon la revendication 3, où lesdites photodiodes respectives de ladite pluralité de photodiodes supplémentaires (21B à 24B) sont placées dans la limite de 0,15 mm desdits coins respectifs.

5. Capteur optique (1) selon l'une quelconque des revendications 1, 2, 3 et 4, où lesdites photodiodes supplémentaires (21B à 24B) sont sensiblement appariées du point de vue électrique avec lesdites premières photodiodes (21A à 24A).

6. Capteur optique (1) selon l'une quelconque des revendications 1 à 4, où, sous éclairement uniforme, le photocourant présent à l'intérieur desdites premières photodiodes (21A à 24A) est égal au photocourant présent à l'intérieur desdites photodiodes supplémentaires (21B à 24B) dans la limite de ± 10 %.

7. Capteur optique (1) selon l'une quelconque des revendications 1 à 6, où chacune desdites premières photodiodes et photodiodes supplémentaires possède une aire active d'environ 0,8 x 0,8 mm, avec une séparation de métallisation de 0,1 mm.

8. Capteur optique (1) selon l'une quelconque des revendications 1 à 7, destiné à être utilisé dans un circuit servant à détecter le défaut d'alignement d'une image projetée d'un système vidéo, et où ladite première pluralité de photodiodes (21A à 24A) est une disposition en montage quadruple à quatre quadrants destinés à être éclairés par ladite image projetée et produisant, en réponse, quarte potentiels photovoltaiques qui correspondent à des parties respectives de ladite image projetée arrivant sur certains, respectifs, desdits quadrants ; où des photodiodes respectives de ladite pluralité de photodiodes supplémentaires (21B à 24B) sont connectées aux coins respectifs de ladite disposition en montage quadruple à quatre quadrants en parallèle et suivant une polarité inverse par rapport aux photodiodes respectives de ladite première pluralité de photodiodes.

9. Circuit comportant un capteur optique selon la revendication 8, ledit circuit comprenant en outre un moyen (65, 67, 69, 71) servant à convertir lesdits quatre potentiels photovoltaïques en des valeurs numériques respectives ; et un moyen servant à détecter une inégalité desdites valeurs numériques et indiquant en réponse, la détection d'un défaut d'alignement de ladite image projetée.
